**Europäisches Patentamt**

**European Patent Office**

**Office européen des brevets**

(19)

(11) Numéro de publication : **0 501 864 A1**

# (12) DEMANDE DE BREVET EUROPEEN

(21) Numéro de dépôt : **92400468.2**

(22) Date de dépôt : **24.02.92**

(51) Int. Cl.⁵ : **C03C 17/23**

(30) Priorité : **25.02.91 FR 9102209**

(43) Date de publication de la demande :
**02.09.92 Bulletin 92/36**

(84) Etats contractants désignés :
**AT BE CH DE DK ES FR GB GR IT LI LU MC NL PT SE**

(71) Demandeur : **METALEUROP S.A.**
**Le Péripole 118, 58, rue Roger Salengro**
**F-94126 Fontenay-sous-Bois Cédex (FR)**

(72) Inventeur : **Thomas, Christian**
**27 Cours de Vincennes**
**F-75020 Paris (FR)**
Inventeur : **Fossi, Paul**
**52 avenue de Cressac**
**F-78990 Elancourt (FR)**
Inventeur : **Perrier, Elizabeth**
**35 rue de Savoie**
**F-78310 Maurepas (FR)**

(74) Mandataire : **Martin, Jean-Jacques et al**
**Cabinet REGIMBEAU 26, Avenue Kléber**
**F-75116 Paris (FR)**

(54) **Procédé de réalisation d'un récipient en cristal comportant une couche faisant obstacle à la migration du plomb vers son contenu et récipient ainsi obtenu.**

(57)     L'invention concerne un procédé de réalisation d'un récipient en cristal, caractérisé en ce qu'on dépose à la surface intérieure du récipient une mince couche d'un oxyde métallique transparent et conducteur de l'électricité, faisant obstacle à la migration du plomb contenu dans le cristal vers le contenu du récipient.

La présente invention concerne d'une façon générale la réalisation de conteneurs ou analogues en cristal de plomb.

Le cristal de plomb est depuis longtemps apprécié pour son éclat et sa densité, et est utilisé tout particulièrement pour des flaconnages de luxe pour produits liquides, alimentaires ou autres.

Le cristal de plomb est utilisé traditionnellement pour réaliser des verres, coupes, carafes, etc... destinés à recevoir par exemple des boissons pendant des durées assez courtes.

Mais une tendance actuelle consiste à utiliser le cristal de plomb comme matériau de conditionnement commercial pour des liquides alimentaires, notamment vins et spiritueux (cognac, whisky, vins, etc...). Dans ce cas, et notamment avec des liquides relativement acides comme le vin, on a constaté qu'il se produisait à terme une dissolution de certains éléments contenus dans la matrice silicatée constitutive du cristal.

Ce phénomène de dissolution partielle n'est pas un phénomène spécifiquement lié au cristal de plomb. On le retrouve en effet de façon bien connue dans des verres alcalins ou alcalino-terreux, où il se produit une lixiviation par le liquide contenu dans le récipient et un échange entre les protons dudit liquide et les cations métalliques contenus dans le verre.

Mais la particularité du cristal réside dans sa forte teneur constitutive en oxyde de plomb. Ainsi, lors d'un contact prolongé avec un liquide, une fraction très faible, mais non négligeable, du plomb est susceptible de se dissoudre dans ledit liquide.

Une telle dissolution est de nature à faire obstacle à l'utilisation de cristal de plomb pour les applications commerciales précitées, à cause de la toxicité qui pourrait en résulter pour les produits contenus.

Pour pallier cette difficulté, on connaît déjà dans la technique antérieure, notamment par les documents FR-A-2 627 768 et FR-A-2 632 628, une solution qui consiste à revêtir l'intérieur de récipients en cristal de plomb d'une fine couche de verre sans plomb. Cette couche forme une barrière à la migration du plomb contenu dans le cristal vers le liquide.

Cette solution connue présente cependant deux inconvénients. Tout d'abord le revêtement mince de verre sans plomb s'avère difficile à réaliser. En outre, un tel revêtement ne constitue pas une barrière absolue à la diffusion du plomb, ce qui peut s'expliquer par le fait que le réseau silicaté reste continu entre le cristal et le liquide, et qu'on peut assister à une certaine migration du plomb à travers le réseau du verre.

La présente invention vise à pallier ces inconvénients de la technique antérieure.

Plus précisément, l'invention vise à réaliser à la surface intérieure d'un récipient en cristal une couche barrière transparente, non toxique, insoluble vis-à-vis d'un liquide alimentaire ou autre destiné à être contenu dans le récipient, non poreuse et résistante à l'abrasion notamment par les agents de lavage.

L'invention vise en outre à proposer une couche barrière dont l'épaisseur puisse être ajustée à la demande, en particulier en vue d'obtenir une variété d'effets optiques, allant de l'irisation interférentielle jusqu'à la neutralité optique parfaite.

Un autre objet de l'invention est de proposer une couche barrière dont la présence ou l'absence dans un récipient puisse être vérifiée extrêmement aisément, avec des moyens simples.

L'invention concerne à cet effet un procédé de réalisation d'un récipient en cristal, caractérisé en ce qu'on dépose à la surface intérieure du récipient une mince couche d'un oxyde métallique transparent et conducteur de l'électricité, faisant obstacle à la migration du plomb contenu dans le cristal vers le contenu du récipient.

L'invention concerne également un récipient en cristal, caractérisé en ce qu'il comporte à sa surface intérieure une mince couche d'un oxyde métallique transparent et conducteur de l'électricité, faisant obstacle à la migration du plomb contenu dans le cristal vers le contenu du récipient.

Selon un autre aspect encore de l'invention, on propose un procédé de détermination de la présence ou de l'absence d'une couche d'oxyde métallique transparent et conducteur de l'électricité à la surface intérieure d'un récipient en cristal, caractérisé en ce qu'on mesure un paramètre représentatif de la résistance électrique entre les deux points de ladite surface intérieure.

De façon préférée, on utilise comme oxyde de l'oxyde d'indium dopé à l'étain, l'épaisseur de la couche étant avantageusement comprise entre 0,01 et 0,1 micromètre. Des couches de plus forte épaisseur peuvent bien entendu être envisagées notamment lorsque des effets optiques d'irisation sont recherchés.

On peut également utiliser d'autres oxydes transparents, notamment l'oxyde d'étain, et plus généralement tout oxyde d'un ou de plusieurs métaux ayant en même temps une résistivité électrique sensiblement inférieure à celle du cristal.

Pour effectuer le dépôt de la couche barrière, on peut utiliser des techniques de revêtement classiques, et en particulier un dépôt sous vide, un dépôt chimique en phase vapeur, une pyrolyse. Un procédé particulièrement approprié est la technique de pyrolyse connue sous la dénomination "Pyrosol".

On se référera pour plus de détails quant à certains de ces procédés aux demandes de brevets FR-A-2 576 324, FR-A-2 633 920 et FR-A-2 634 753, dont les contenus sont incorporés à la présente description par référence.

De façon préférée, l'oxyde d'indium est dopé à l'étain à raison de 5 à 25% en poids de $SnO_2$ par rapport au poids total d'oxyde.

Un avantage particulier d'un récipient pourvu d'une couche barrière selon la présente invention résulte de la faible résistivité électrique inhérente à ce type d'oxyde, typiquement de l'ordre de quelques dizaines d'ohms carrés. Ainsi il est possible de vérifier aisément, par exemle à l'aide d'un simple ohm-mètre, si un revêtement selon la présente invention est présent ou non dans un récipient en cristal donné.

Bien entendu, la présente invention n'est nullement limitée à la description ci-dessus, mais l'homme de l'art saura y apporter toute variante ou modification conforme à son esprit.

**Revendications**

1. Procédé de réalisation d'un récipient en cristal, caractérisé en ce qu'on dépose à la surface intérieure du récipient une mince couche d'un oxyde métallique transparent et conducteur de l'électricité, faisant obstacle à la migration du plomb contenu dans le cristal vers le contenu du récipient.

2. Procédé selon la revendication 1, caractérisé en ce qu'on utilise comme oxyde métallique de l'oxyde d'indium dopé à l'étain.

3. Procédé selon l'une des revendications 1 et 2, caractérisé en ce que le dépôt est effectué par une technique choisie dans le groupe comprenant le dépôt sous vide, le dépôt chimique en phase vapeur et la pyrolyse.

4. Récipient en cristal, caractérisé en ce qu'il comporte à sa surface intérieure une mince couche d'un oxyde métallique transparent et conducteur de l'électricité, faisant obstacle à la migration du plomb contenu dans le cristal vers le contenu du récipient.

5. Récipient selon la revendication 4, caractérisé en ce que l'oxyde métallique est constitué par de l'oxyde d'indium dopé à l'étain.

6. Récipient selon l'une des revendications 4 et 5, caractérisé en ce que l'épaisseur de la couche d'oxyde métallique est comprise entre environ 0,01 et 0,1 micromètre.

7. Récipient selon la revendication 5, caractérisé en ce que l'oxyde d'indium est dopé à raison de 5 à 25% en poids d'oxyde d'étain par rapport au poids total d'oxyde.

8. Procédé de détermination de la présence ou de l'absence d'une couche d'oxyde métallique transparent et conducteur de l'électricité à la surface intérieure d'un récipient en cristal, caractérisé en ce qu'on mesure un paramètre représentatif de la résistance électrique entre deux points de ladite surface intérieure.

Office européen
des brevets

**RAPPORT DE RECHERCHE EUROPEENNE**

Numero de la demande

EP    92 40 0468

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | LU-A-84 898 (L'INSTITUT NATIONAL DU VERRE) <br> * revendications 1,6 * <br> --- | 1,3,4,6 | C03C17/23 |
| A | US-A-3 182 839 (HOAG) <br> * revendications * <br> --- | 1,3,4,6 | |
| A | WORLD PATENTS INDEX LATEST <br> Week 9036, <br> Derwent Publications Ltd., London, GB; <br> AN 90-272012 <br> & JP-A-2 192 436 (FUJI GLASS KK) 30 Juillet 1990 <br> * abrégé * <br> --- | 1,3,4 | |
| A | DD-A-206 269 (RECHE) 18 Janvier 1984 <br> * abrégé; exemple * <br> ----- | 1-7 | |

**DOMAINES TECHNIQUES RECHERCHES (Int. Cl.5 )**

C03C
B65D

Le présent rapport a été établi pour toutes les revendications

| Lieu de la recherche | Date d'achèvement de la recherche | Examinateur |
|---|---|---|
| LA HAYE | 26 MAI 1992 | VAN BOMMEL L. |

CATEGORIE DES DOCUMENTS CITES

X : particulièrement pertinent à lui seul
Y : particulièrement pertinent en combinaison avec un
     autre document de la même catégorie
A : arrière-plan technologique
O : divulgation non-écrite
P : document intercalaire

T : théorie ou principe à la base de l'invention
E : document de brevet antérieur, mais publié à la
     date de dépôt ou après cette date
D : cité dans la demande
L : cité pour d'autres raisons
.........................................................................................
& : membre de la même famille, document correspondant

EPO FORM 1503 03.82 (P0402)